## Europäisches Patentamt
### European Patent Office
### Office européen des brevets

(19)

(11) Veröffentlichungsnummer: **0 056 143**
**B1**

(12)

# EUROPÄISCHE PATENTSCHRIFT

(45) Veröffentlichungstag der Patentschrift:
06.03.85

(51) Int. Cl.⁴: **B 23 K 7/02**, B 65 G 47/92

(21) Anmeldenummer: **81110715.0**

(22) Anmeldetag: **23.12.81**

(54) Metallschneidmaschine mit Abschnittaufnahme und Fördermagneten.

(30) Priorität: **05.01.81 US 222576**

(43) Veröffentlichungstag der Anmeldung:
**21.07.82 Patentblatt 82/29**

(45) Bekanntmachung des Hinweises auf die Patenterteilung:
**06.03.85 Patentblatt 85/10**

(84) Benannte Vertragsstaaten:
**DE FR GB IT**

(56) Entgegenhaltungen:
**DE - C - 201 484**
**FR - A - 2 232 394**
**GB - A - 784 477**
**GB - A - 1 274 111**
**US - A - 2 363 007**
**US - A - 4 012 027**
**US - A - 4 139 180**

(73) Patentinhaber: **MESSER GRIESHEIM GMBH, Hanauer Landstrasse 330, D-6000 Frankfurt/Main 1 (DE)**

(72) Erfinder: **Balfanz, Frederick J., 2008 Laura Lane, Waukesha Wisconsin 53051 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vorliegende Erfindung betrifft eine Maschine zum Abschneiden einer Mehrzahl gesonderter Stücke von einem Metallwerkstück gemäß dem Oberbegriff des Anspruchs 1.

Derartige Maschinen werden verwendet, um eine Mehrzahl verhältnismäßig kleiner Stücke aus einer großen Metallplatte herauszuschneiden. Zur Regelung der Bewegung der Schneidköpfe bedienen sich solche Maschinen in der Regel einer numerischen Steuerung, photoelektrischer Fühler und dgl.

Nach dem Schneiden müssen die Abschnitte von der Platte entfernt und zu einer anderen Stelle gefördert werden.

Die Abschnitte bestehen üblicherweise aus sehr schwerem Stahl, und ihr Gewicht kann sich von je ungefähr 2 Kilogramm bis auf einige hundert Kilogramm belaufen. Gewöhnlich sind die Stücke zur Handhabung durch einen Bedienungsmann zu schwer.

Es ist bekannt, beim Abwracken großer Schiffe und dgl., Elektromagnete zur Aufnahme und Förderung großer Metallgegenstände zu verwenden (US-A-4 139 180). Damit lassen sich zwar gleichzeitig mehrere Einzelstücke von einem großen Schrotteil abschneiden; ein gleichzeitiger Abtransport dieser Einzelstücke ist allerdings nur bedingt und eine gleichzeitige Lagerung dagegen gar nicht möglich.

Weiterhin ist eine Einrichtung bekannt (US-A-2 363 007), bei der auf einem Schlitten ein Schneidbrenner sowie ein Elektromagnet zum Manipulieren eines Werkstückes montiert ist.

Diese Einrichtung eignet sich nur für das Schneiden eines einzelnen Teiles.

Der Erfindung liegt die Aufgabe zugrunde, eine Maschine zum Abschneiden einer Mehrzahl gesonderter Stücke von einem Metallwerkstück so auszubilden, daß auf baulich und steuerungsmäßig einfache Weise mehrere Teile gleichzeitig geschnitten, von der Schnittstelle wegtransportiert und gelagert werden können.

Diese Aufgabe wird bei der gattungsgemäßen Maschine durch die kennzeichnenden Merkmale des Anspruchs 1 gelöst.

Weiterbildungen sind in den Unteransprüchen angegeben.

Der mit der Erfindung erzielte Vorteil liegt insbesondere in der erhöhten Produktivität der zum Brennschneiden und Abtransport der geschnittenen Teile verwendeten Maschine.

Zwei Ausführungsbeispiele der Erfindung sind in der Zeichnung dargestellt und werden im folgenden näher beschrieben. Es zeigt

Fig. 1 eine perspektivische Ansicht einer erfindungsgemäßen Metallschneidmaschine;

Fig. 2 einen Schnitt entlang der Linie 2-2 in Fig. 1, wobei eine der Magnetbaugruppen in zurückgezogener Stellung während des Schneidens gezeigt ist;

Fig. 3 eine ähnliche Ansicht wie Fig. 2, wobei das Greifen und Aufnehmen eines Abschnitts nach dem Schneiden gezeigt ist;

Fig. 4a—4e schematische, aufeinanderfolgende Darstellungen von der Schneidstufe über die Aufnahme bis zum Absetzen der Abschnitte an der Sammelstelle;

Fig. 5 eine zweite Ausführungsart der Maschine.

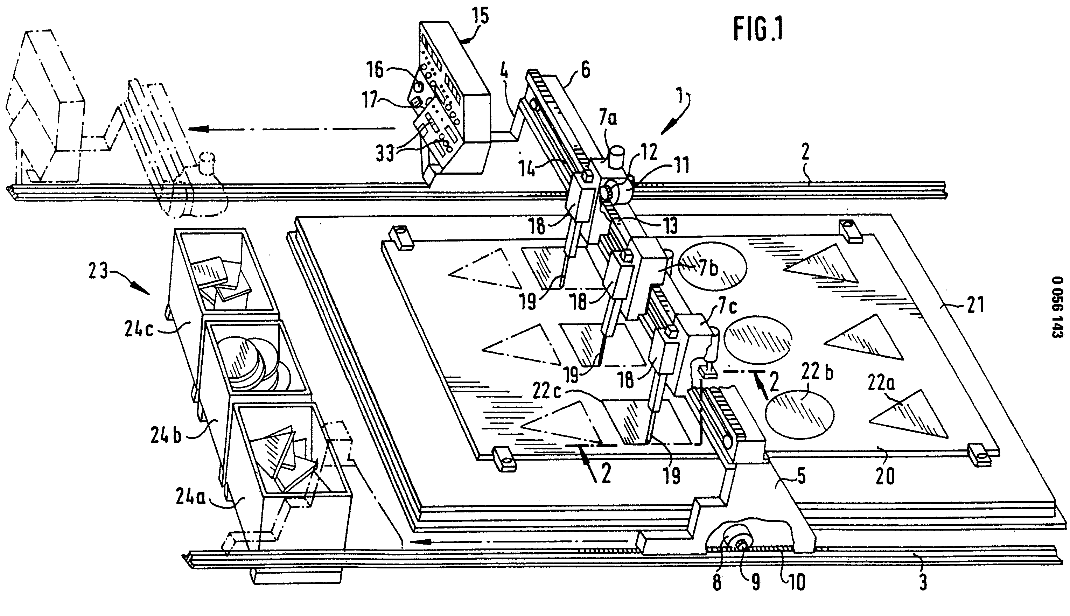

Eine Metallschneidmaschine 1 ist so ausgebildet (Fig. 1), daß sie auf einem Paar am Boden befestigter, längsverlaufender Trägerschienen 2 und 3 gelagert werden kann. Entlang den Schienen verfahrbar gelagerte Trägergestelle 4 bzw. 5 stützen die Enden einer quer angeordneten Strebe oder Brücke 6, die sich normalerweise über das Schneidfeld erstreckt. Mehrere Schlitten 7a, 7b und 7c sind in geeigneter Weise entlang der Brücke 6 beweglich gelagert. Die Brücke 6 ist entlang den Trägerschienen 2, 3 mittels irgendeines geeigneten Antriebsmechanismus wie eines im Gestell 5 gelagerten Motors 8 mit einem mit der entlang der Schiene 3 angeordneten Zahnstange 10 in Eingriff stehenden Ritzel 9 verfahrbar. Das Stützgestell 4 enthält ähnliche (nicht gezeigte) Antriebsmittel, um gleichmäßige und parallele Bewegung der Gestelle sicherzustellen.

In ähnlicher Weise ist der Schlitten 7a entlang der Brücke 6 durch ein geeignetes Antriebsmittel wie einem auf dem Schlitten befindlichen Motor 11 mit einem mit der entlang der Brücke angeordneten Zahnstange 13 in Eingriff stehenden Ritzel 12 beweglich. Der Schlitten 7a wird als Hauptschlitten bezeichnet und ist ständig an einem endlosen beweglichen Band 14 befestigt. Die Schlitten 7b und 7c werden als Nebenschlitten bezeichnet und zur Veränderung des Abstands zwischen den Schlitten wahlweise mit dem beweglichen Band 14 in Eingriff gebracht.

Zur Steuerung des Betriebs der Motoren 8 und 11, des Eingriffs der Nebenschlitten 7b und 7c mit dem Band 14 und weiterer, noch zu beschreibender Teile ist eine Eingabesteuerprogrammiereinrichtung vorgesehen. Diese kann ein beliebiger, wohlbekannter Typ wie ein photoelektrischer Fühler sein, doch ist sie bei der vorliegenden Ausführung als numerisches Steuersystem gezeigt. Wie in Figur 1 schematisch angedeutet wird eine Eingabesteuereinheit 15 dazu verwendet, die numerische Steuerausrüstung zu programmieren und zu betreiben, welche ein Papier- oder Magnetband 16 einschließt, das durch den herkömmlichen Abtastkopfteil 17 läuft, um eine Ausgabe zum Antrieb der oben genannten Motoren entlang geeigneter Strecken mit der zur Erstellung programmierter Wege für die Schlitten 7 gewünschten Geschwindigkeit und Richtung zu liefern.

Jeder Schlitten 7 trägt auf seiner Vorderseite einen Schneidkopf 18, der bei dieser Ausführung einen von den üblichen, nicht gezeigten Quellen mit Strom und Gas versorgten Schneidbrenner 19 umfaßt. Die Brenner 19 sind in der üblichen Weise selektiv durch die Eingabesteuereinheit 15 betätigbar. Die Brenner 19 sind befähigt, ein ebenes, plattenartiges, auf einem Auflagetisch 21 befestigtes Metallwerkstück 20 zu schneiden.

Im vorliegenden Fall ist die Eingabesteuereinheit 15 für einen solchen Maschinenbetrieb programmiert, daß die Brenner 19 eine Mehrzahl kleiner Einzelstücke 22 aus dem Werkstück 20 schneiden. Die Stücke können alle gleich sein, doch sind sie in Figur 1 als mehrfache Querreihen verschiedener Gestalt, nämlich Dreiecke 22a, Kreise 22b und Rechtecke 22c, gezeigt. Da die Nebenschlitten 7b und 7c den gleichen Weg zurücklegen wie der Hauptschlitten 7a, müssen sämtliche Stücke in einer Reihe die gleiche Gestalt aufweisen.

Dabei sind in der Maschine 1 Vorrichtungen zur selektiven Entfernung der Abschnitte 22 vom Werkstück 20 und deren Förderung zu einer vom Werkstück fernliegenden Sammelstelle eingebaut. Bei der vorliegenden Ausführung liegt die Sammelstelle 23 zwischen den Schienen 2 und 3 neben einem Ende des Tischs 21. Die Stelle 23 kann der Boden oder auch ein Behältnis für Abschnitte 22 sein. Wegen den bei der vorliegenden Ausführung möglichen vielfältigen Gestalten umfaßt das gezeigte Behältnis eine Mehrzahl von Gefäßen 24a, 24b bzw. 24c zur Aufnahme der jeweiligen Einzelabschnitte 22a, 22b bzw. 22c.

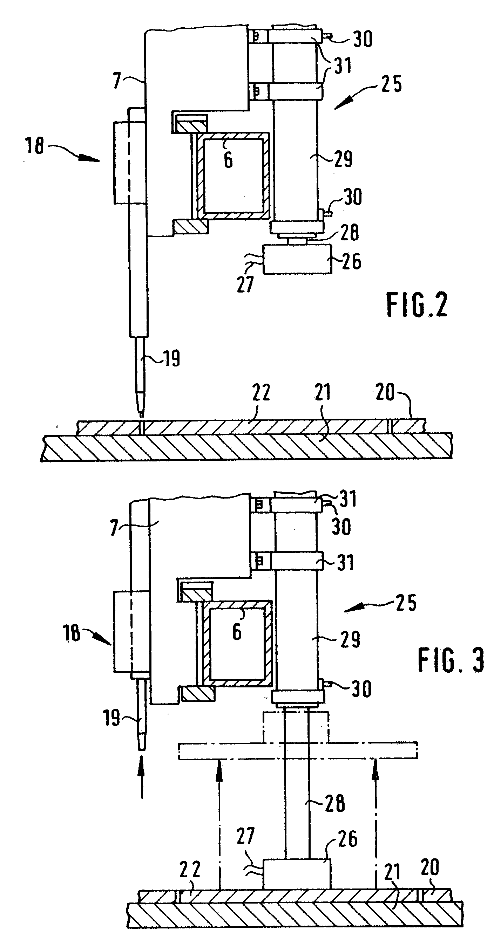

Die Entfernungs- und Fördereinrichtung umfaßt bei der vorliegenden Ausführung eine Magnetbaugruppe 25, die jeweils auf der Rückseite der Schlitten 7a–7c angebracht und also mit dem entsprechenden Schneidkopf 18 zur gemeinsamen Bewegung entlang der Brücke 6 verbunden ist. Wie man am besten in Figur 2 und 3 erkennt, umfaßt jede Magnetbaugruppe 25 einen über geeignete Drähte 27 an eine Stromquelle angeschlossenen Elektromagneten 26, der durch die Eingabesteuerung 15 selektiv betätigbar ist. Der Magnet 26 ist jeweils senkrecht zum Werkstück 20 beweglich angeordnet. Zu diesem Zweck ist der Magnet an der Kolbenstange 28 einer geeigneten Bewegungsvorrichtung wie eines Druckluftzylinders oder hydraulischen Zylinders 29 angebracht, der über Leitungen 30 mit einer nicht gezeigten, ventilkontrollierten Druckmediumquelle verbunden und durch die Eingabesteuereinheit 15 betätigbar ist.

Der Zylinder 29 ist mittels geeigneter Bügel 31 an der Rückseite des jeweiligen Schlittens 7a–7c befestigt.

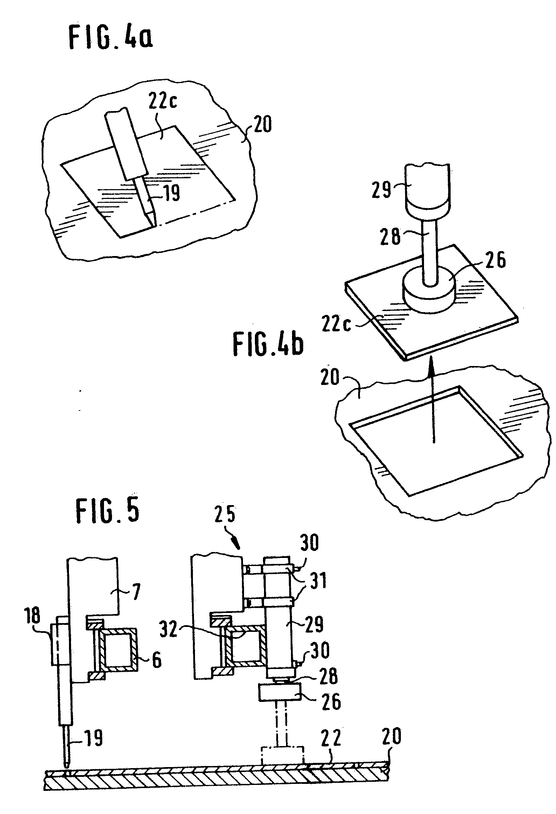

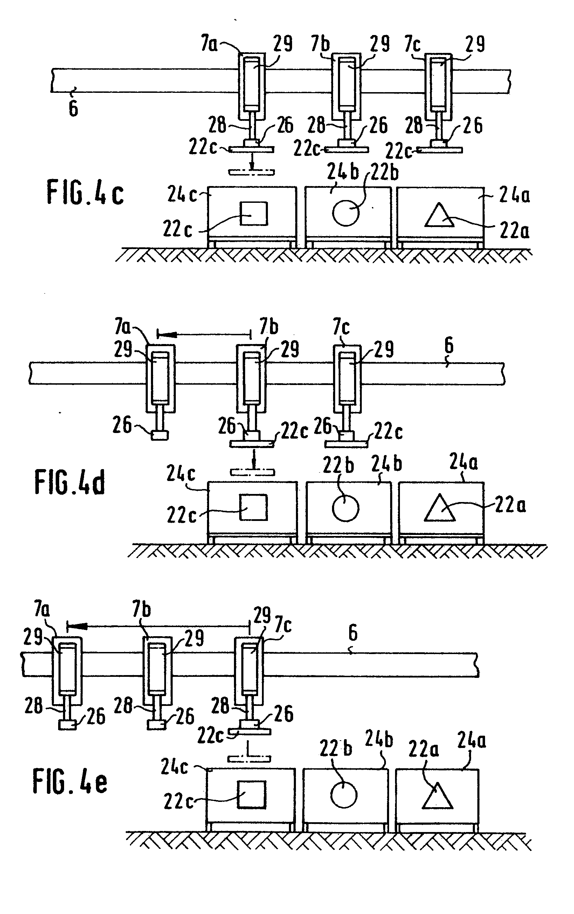

Insbesondere mit Bezug auf Figur 2 und 4a befindet sich der Brenner 19 während des Schneidbrennens der Stücke 22 aus dem Werkstück 20 in der unteren Stellung direkt über dem Werkstück, während die Elektromagneten 26 auf der von den Brennern abgekehrten Seite der Brücke 6 zurückgezogen und nicht in Betrieb sind. Sobald die Abschnitte wie in Figur 1 gebildet sind, werden die Brenner 19 zurückgezogen, wie insbesondere in Figur 3 gezeigt. Danach und gemäß dem jeweiligen Programm der Eingabesteuereinheit 15 wird mindestens ein Elektromagnet 26 bis zum Eingriff mit einem Abschnitt 22 abgesenkt, und nachdem durch Betätigung des Magneten der Abschnitt magnetisch daran befestigt ist, wird der Magnet vom Werkstück 20 hinweg nach oben gehoben. Siehe auch Figur 4b.

Es ist zwar möglich, jeweils einen einzelnen Abschnitt 22 zu entfernen und zu fördern, doch ist zu erwarten, daß man eine Mehrzahl Abschnitte in beliebiger Reihenfolge entfernen wird. Mittels der programmierten Steuerung kann man eine Mehrzahl von Abschnitten alle gleichzeitig zu einer Sammelstelle 23 fördern, wo diese zur gleichen Zeit abgesetzt werden können. Die Darstellung in Figur 1 und Figur 4a–4e betrifft jedoch nur die Handhabung von quadratischen Abschnitten 22c während einer Betriebsstufe, wobei die verbleibenden Abschnitte 22a und 22b zur späteren Behandlung verbleiben.

Dafür wird nach dem Aufnehmen der Motor 8 betätigt, um die Brücke 6 in die in Figur 1 gestrichelt gezeichnete Stellung zu verfahren, d. h. vom Tisch 21 hinweg und über die Stelle 23. Ebenfalls betätigt das Programm die Motoren 11, um die linke, an der Brücke angebaute Magnetbaugruppe 25 über das Gefäß 24c für quadratische Stücke zu bringen, wo das Stück 22c losgelassen wird, damit es in das Gefäß fällt, wie Figur 4c zeigt. Das Programm bringt dann den Schlitten 7b mit dem beweglichen Band 14 in Eingriff, sodaß die mittlere Baugruppe 25 über das Gefäß 24c fährt und ihr Stück fallen läßt, wie in Figur 4d. Zuletzt findet derselbe Vorgang mit dem Schlitten 7c und der rechten Baugruppe 25 statt, wie Figur 4e zeigt.

Die Motoren 8 und 11 werden dann betätigt, um die Brücke 6 und die Baugruppen 25 für den nächsten Arbeitsgang zur Entfernung von Stücken über das nun gerüstartige Werkstück 20 zurückzufahren.

Das System ist sehr vielseitig im Betrieb. Soll beispielsweise je ein Abschnitt 22 jeder Gestalt gleichzeitig an der Stelle 23 abgesetzt werden, so könnte die linke Magnetbaugruppe 25 das linke Dreieck 22a, die mittlere Baugruppe 25 den mittleren Kreis 22b und die rechte Baugruppe 25 das rechte Rechteck 22c aufnehmen. Dann könnte man die Brücke 6 über die Stelle 23 fahren und alle drei Abschnitte gleichzeitig in ihre Gefäße 24a, b bzw. c absetzen.

In Figur 1–3 ist eine Ausführungsform erläutert, bei der die an einer Brücke angebauten Magnetbaugruppen 25 auf derselben Brücke wie die Schneidköpfe 18 angeordnet sind, sodaß sie über ihre jeweiligen Lagerschlitten 7a–7c fest miteinander verbunden sind. Sie können somit eine gemeinsame Verstellsteuerung aufweisen. In manchen Fällen kann jedoch wünschenswert sein, daß Baugruppen 25 auf einer ähnlichen Sekundärbrücke 32 angebracht sind, die parallel auf Abstand von der brennertragenden Hauptbrücke 6 angeordnet ist; siehe Figur 5. Dabei wären dann zusätzliche Steuerfunktionen notwendig.

Ferner kann es wünschenswert sein, die Magnetbaugruppen 25 auf der Brücke 6 oder 32 so anzuordnen, daß sie nach erfolgter Einstellung des richtigen Abstands in ihrer Stellung verriegelt werden können. Dies wäre der Fall, wenn nur Stücke einer einzigen Gestalt vom Werkstück 20 ausgeschnitten werden, sodaß eine Horizontalbewegung der Magnetbaugruppen 25 entlang der Brücke entfällt.

Der selektive Betrieb der Vorrichtung erfolgt zwar vorzugsweise programmiert und automatisch, doch kann auch zumindest ein Teil des Arbeitsgangs (wie das Aufnehmen, die Förderung bzw. die Absetzung der Abschnitte) auch von Hand gesteuert werden, z. B. mit den Steuerschaltern 33 auf der Konsole der Einheit 15.

**Patentansprüche**

1. Maschine zum Abschneiden einer Mehrzahl gesonderter Stücke von einem Metallwerkstück, mit

a) längsverlaufenden Trägereinrichtungen (2, 3, 4, 5),

b) mehreren, nahe an das Werkstück (20) bringbaren und in Querrichtung beweglichen Schlitten (7a, 7b, 7c),

c) auf den Schlitten (7a, 7b, 7c) angebrachten Schneidwerkzeugen zur Bildung mehrerer aus dem Werkstück (20) geschnittener Einzelstücke (22),

d) einer querverlaufenden, nahe an das Werkstück (20) bringbaren und entlang den Trägereinrichtungen (2, 3, 4, 5) verfahrbaren Brücke (6), entlang welcher (6) die Schlitten (7a, 7b, 7c) beweglich angeordnet sind,

e) mehreren elektromagnetischen Vorrichtungen auf der Brücke (6) zum selektiven Aufnehmen der Abschnitte (22) von dem Werkstück (20),

f) Einrichtungen zum Verfahren der Brücke und der elektromagnetischen Vorrichtungen vom Werkstück (20) hinweg zu einer von diesem fernliegenden Stelle (23) sowie

g) Mitteln zur Erregung der elektromagnetischen Vorrichtungen zwecks Abschnittaufnahme und zu deren Aberregung, um die Abschnitte (22) an der fernliegenden Stelle (23) abzusetzen,

dadurch gekennzeichnet, daß

h) die elektromagnetischen Vorrichtungen aus auf den Schlitten (7a, 7b, 7c) montierten Magnetbaugruppen (25) bestehen,

i) sich die Schlitten (7a, 7b, 7c) entlang der Brücke (6) als Funktion einer Eingabesteuereinheit (15) bewegen, die so aufgebaut ist, daß die Steuerung der Schlittenbewegung ebenfalls die Bewegung der Schneidwerkzeuge (19) und die elektromagnetischen Vorrichtungen steuert.

2. Schneidmaschine nach Anspruch 1, dadurch gekennzeichnet, daß

a) die Schneidwerkzeuge (19) auf der einen Seite der Brücke (6) angeordnet sind und

b) sich die Magnetbaugruppen (25) auf der den Schneidwerkzeugen (19) gegenüberliegenden Seite der Brücke (6) befinden.

3. Schneidmaschine nach Anspruch 1 oder 2, dadurch gekennzeichnet, daß die Mittel zur Erregung und Aberregung der elektromagnetischen Vorrichtungen so ausgebildet sind, daß die Abschnitte (22) selektiv einzeln oder zu mehreren aufgenommen oder abgesetzt werden.

4. Schneidmaschine nach einem der Ansprüche 1 bis 3, dadurch gekennzeichnet, daß die Einrichtungen zum Verfahren der Brücke (6) sowie die Erregungs- und Aberregungsmittel wahlweise als Funktion einer Eingabesteuereinheit (15) betätigbar sind.

5. Schneidmaschine nach Anspruch 1, dadurch gekennzeichnet, daß die Schlitten (7a, 7b, 7c) entlang einer zweiten, der ersten Brücke parallel liegenden Brücke (32) beweglich gelagert sind, wobei die zweite Brücke (32) entlang den oben genannten Trägereinrichtungen (2, 3, 4, 5) verfahrbar ist.

**Claims**

1. Machine for cutting a plurality of separate pieces from a metal workpiece with:

a) longitudinally extending support means (2, 3, 4, 5),

b) a plurality of carriages (7a, 7b, 7c) adapted to be positioned adjacent the workpiece (20) and movable in a transverse direction,

c) cutting tools mounted on said carriages (7a, 7b, 7c) for forming a plurality of individual cut pieces (22) from the workpiece (20),

d) a transversely extending bridge (6) adapted to be positioned adjacent the workpiece (20) and movable along said support means (2, 3, 4, 5),

e) a plurality of electromagnetic means on said bridge (6) for selectively picking up said cut pieces (22) from said workpiece (20),

f) means for moving said bridge and electromagnetic means from adjacent the workpiece (20) to a station (23) remote from the said workpiece (20),

g) means for activating said electromagnetic means for cutpiece pickup, and for de-activating said electromagnetic means for release of the cut pieces (22) at said remote station (23),

characterized thereby, that

h) the said electromagnetic means comprises magnet assemlies (25) mounted on said carriages (7a, 7b, 7c),

i) the said carriages (7a, 7b, 7c) are moved along said bridge (6) in response to an input control unit, the construction being such that control of carriage movement also controls movement of said cutting tools (19) and said electromagnetic means.

2. Cutting machine of claim 1, characterized thereby, that

a) the said cutting tools (19) are disposed on one side of said bridge (6),
b) and said magnet assemblies (25) are disposed on the side of said bridge (6) opposite said cutting tools (19).

3. Cutting machine of claims 1 or 2, characterized thereby, that the means for activating and de-activating said electromagnetic means is constructed so that said cut pieces (22) are selectively picked up or released individually or in multiples.

4. Cutting machine of claims 1, 2 or 3, characterized thereby, that the bridge moving means, and activating and de-activating means, are selectively actuatable in response to an input control unit.

5. Cutting machine of claim 1, characterized thereby, that the carriages (7a, 7b, 7c) are mounted for movement along a second bridge (32) disposed parallel to said first bridge and with said second bridge (32) being movable along said support means (2, 3, 4, 5).

## Revendications

1. Machine pour découper plusieurs pièces distinctes dans une pièce de métal avec:

a) des installations de support (2, 3, 4, 5), à déplacement longitudinal,
b) plusieurs chariots (7a, 7b, 7c), mobiles dans la direction transversale et susceptibles d'être mis au voisinage de la pièce (20),
c) des outils de découpe portés par les chariots (7a, 7b, 7c) pour former plusieurs pièces distinctes (22) découpées dans la pièce (20),
d) un pont (6) à déplacement transversal, susceptible d'être mis au voisinage de la pièce (20) et d'être déplacé le long des installations de support (2, 3, 4, 5), le long desquelles (6) les chariots (7a, 7b, 7c) sont mobiles.
e) plusieurs dispositifs électromagnétiques sur le pont (6) pour prendre sélectivement les découpes (22) de la pièce (20).
f) des installations pour déplacer le pont et les dispositifs électromagnétiques par rapport à la pièce (20) vers un endroit (23) éloigné de celle-ci ainsi que,
g) des moyens pour exciter les dispositifs électromagnétiques pour prendre les pièces découpées et pour désexciter ces dispositifs pour déposer les pièces découpées (22) à l'endroit éloigné (23),

caractérisée en ce que:

h) les dispositifs électromagnétiques se composent de groupes de construction, magnétiques (25) montés sur les chariots (7a, 7b, 7c),

i) les chariots (7a, 7b, 7c) se déplacent le long du pont (6) en fonction d'une unité de commande d'entrée (15) qui est réalisée de façon que la commande du mouvement des chariots commande également le mouvement des outils de coupe (19) et des dispositifs électromagnétiques.

2. Machine de découpage selon la revendication 1, caractérisée en ce que:

a) les outils de découpage (19) sont prévus d'un côté du pont (6) et
b) les groupes constructifs d'aimant (25) sont prévus sur le pont (6), du côté opposé des outils de découpe (19).

3. Machine de découpe selon la revendication 1 ou 2, caractérisée en ce que les moyens pour exciter et pour désexciter les dispositifs électromagnétiques sont réalisés de façon que les pièces découpées (22) soient prises ou déposées, sélectivement, séparément ou en groupe.

4. Machine de découpage selon l'une des revendications 1 à 3, caractérisée en ce que les installations de déplacement du pont (6) ainsi que les moyens d'excitation et de désexcitation sont susceptibles d'être actionnés sélectivement en fonction d'une unité de commande d'entrée (15).

5. Machine de découpage selon la revendication 1, caractérisée en ce que les chariots (7a, 7b, 7c) sont montés mobiles le long d'un second pont (32) disposé parallèlement au premier pont, le second pont (32) pouvant être déplacé le long des installations de support (2, 3, 4, 5) mentionnées ci-dessus.

FIG.1

FIG.2

FIG. 3

FIG.4a

FIG.4b

FIG.5

FIG.4c

FIG.4d

FIG.4e